# EUROPEAN PATENT APPLICATION

(11) **EP 2 120 127 A1**
(43) Date of publication of application: **18.11.2009**
(21) Application number: 08008853.7
(22) Date of filing: 13.05.2008
(51) Int. Cl.: G06F 1/18

(54) **Pluggable motherboard module and computer system with the same**

(71) Applicant: Silver-Stone Technology Co., Ltd., Zhonghe City T'ai pei County 235 (TW)
(72) Inventor: Ou, Tony Zan-How, Zhonghe City Taipei County 235 (TW)
(74) Representative: Urner, Peter

(57) **Abstract**

A pluggable motherboard module and a computer system with the pluggable motherboard module are disclosed. The pluggable motherboard module is connected to a first connector 20 in a computer chassis 10. The motherboard module includes a retaining board 31, a motherboard 32 and a second connector 33. The retaining board 31 is slidably connected to the chassis 10, and the motherboard 32 is mounted to the retaining board 31, and the second connector 33 is connected to the retaining board 31 and electrically coupled to the motherboard 32, and provided for connecting the first connector 20. With the quick plugging and unplugging functions of the first connector 20 and the second connector 33, the motherboard module can be removed from the interior of the computer system to facilitate installing or removing components on the motherboard 32.

## Description

### BACKGROUND OF THE INVENTION

### 1. Field of the Invention

The present invention generally relates to a motherboard module, and more particularly to a pluggable motherboard module and a computer system with the pluggable motherboard module.

### 2. Description of Prior Art

In recent years, computer has become a necessary tool in our life, and usually several data access devices are connected to the computer for users to input information from the devices into the computer and output or display information from the computer.

However, existing computers still have the following drawbacks. In a computer casing, a motherboard and a data access device are connected by a flat cable and a power cable, but the computer usually does not come with a design of cable management, and the flat cables and the power cables are usually tangled with each other in the internal space of the computer casing.

In general, the structure of a conventional computer casing includes a metal frame; a removable side panel installed separately on both left and right lateral sides of the metal frame; a motherboard and a data access device and a power supply device mounted onto the metal frame and connected to a flat cable and a power cable; and a side panel covered onto both lateral sides of the metal frame for covering and protecting the motherboard, data access device, power supply device, flat cable and power cable, etc.

If a user wants to replace a component or device in a computer system, the user needs to remove the side panel of the computer casing, and then remove the flat cables and power cables installed inside the casing to clear the space in the casing before replacing the component or device by a new one. After the replacement of the component or device, the user needs to connect the flat cables and power cables in the casing one by one.

Obviously, the aforementioned procedure is very inconvenient, and thus it is a subject of the present invention to study and develop a pluggable motherboard module for achieving the effect of replacing a component or device in the casing without requiring users to remove all flat cables and power cables one by one, and thus saving lots of time.

### SUMMARY OF THE INVENTION

In view of the shortcomings of the prior art, it is a primary objective of the present invention to provide a pluggable motherboard module and a computer system with the same, wherein a first connector and a second connector provide a quick plugging function for detaching the motherboard module quickly from the interior of the computer system, and installing a component onto a motherboard conveniently.

To achieve the foregoing objective, the invention provides a pluggable motherboard module connected to a first connector in a computer chassis, and the motherboard module comprises a retaining board, a motherboard and a second connector, wherein the retaining board is slidably connected to the chassis, and the motherboard is mounted onto the retaining board, and the second connector is connected to the retaining board and electrically connected with the motherboard and provided for connecting the first connector.

To achieve the foregoing objective, the invention provides a computer system with a pluggable motherboard module, and the computer system comprises a chassis, a first connector and a pluggable motherboard module, wherein the first connector is connected inside the chassis, and the pluggable motherboard module comprises a retaining board, a motherboard and a second connector, and the retaining board is slidably connected to the chassis, and the motherboard is mounted onto the retaining board, and the second connector is connected to the retaining board and electrically connected with the motherboard and provided for connecting the first connector.

### BRIEF DESCRIPTION OF DRAWINGS

Fig. 1 is an exploded view of the present invention;
Fig. 2 is a schematic view of an assembling state in accordance with a preferred embodiment of the present invention;
Fig. 3 is a schematic view of an assembling state in accordance with another preferred embodiment of the present invention;
Fig. 4 is a perspective view of another preferred embodiment of the present invention.

### DETAILED DESCRIPTION OF THE INVENTION

The technical characteristics, features and advantages of the present invention will become apparent in the following detailed description of the preferred embodiments with reference to the accompanying drawings. It is noteworthy to point out that the drawings are provided for illustrating the invention, but not intended for limiting the scope of the invention.

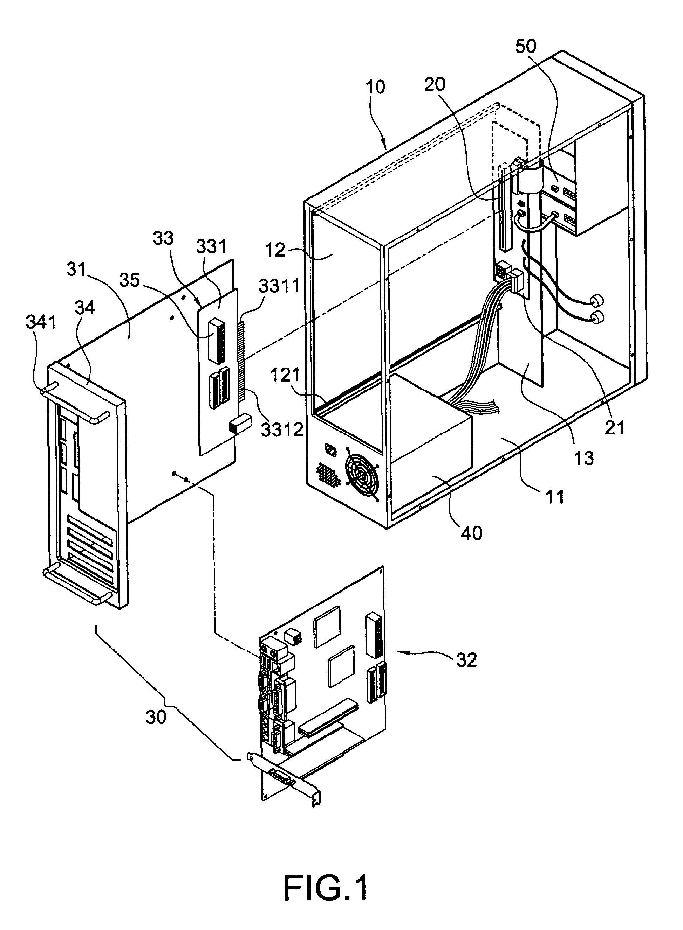

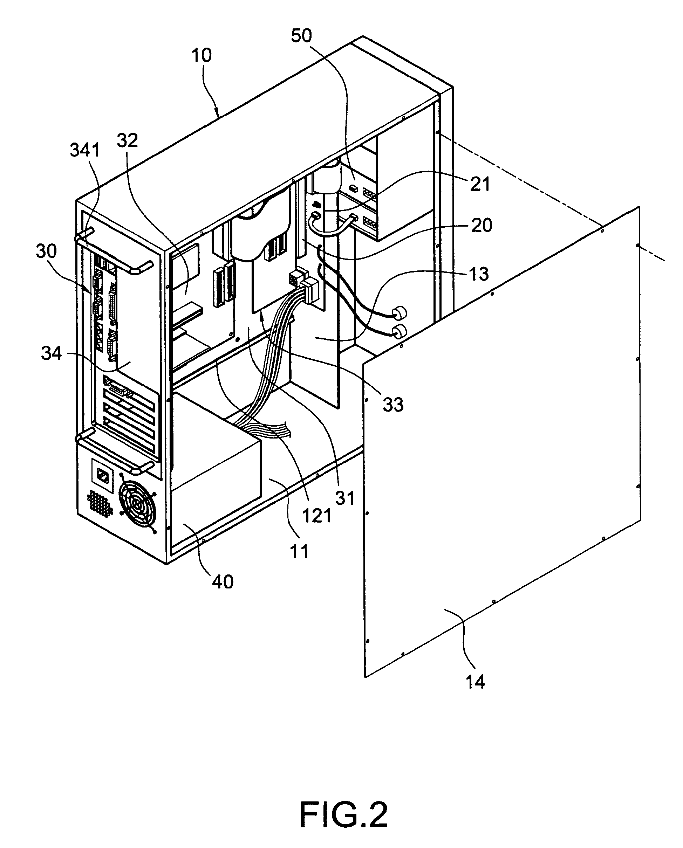

Referring to Figs. 1 and 2 for an exploded view and a schematic view of the present invention respectively, a computer system with a pluggable motherboard module comprises a chassis 10, a first connector 20 and a pluggable motherboard module 30.

The chassis 10 is comprised of a plurality of panels. In this embodiment, the chassis 10 includes a bottom panel 11 and a side panel 12 connected perpendicular to the bottom panel 11, and the side panel 12 is connected perpendicular to a partition 13, and the side panel 12 includes a pair of slide slots 121 disposed thereon.

The first connector 20 is installed and connected to the partition 13, and the computer system further includes a first circuit board 21 connected to the first connector 20.

The pluggable motherboard module 30 includes a retaining board 31, a motherboard 32 and a second connector 33. The retaining board 31 is provided for mounting the motherboard 32, and the retaining board 31 is inserted into the slide slots 121 and slidably moved with respect to the chassis 10. Further, a side of the retaining board 31 is connected to a cover panel 34, and the cover panel 34 includes a plurality of handles 341 for withdrawing the retaining board 31.

The second connector 33 is installed and connected to the retaining board 31, and the second connector 33 is a circuit board connector 331, and a side of the circuit board connector 331 is connected to a plug end 3311, and the plug end 3311 includes a plurality of goldfingers 3312 connected with the first connector 20 for transmitting data. The circuit board connector 331 includes a plurality of ports 35 for electrically connecting the motherboard 32 and the ports 35.

The computer system with a pluggable motherboard module 30 in accordance with present invention further comprises a power supply unit 40 and a plurality of storage units 50. In this embodiment, the power supply unit 40 is a power supply device electrically connected with the first circuit board 21, but not limited to such arrangement only. The storage unit 50 can be a hard disk drive, a floppy disk drive, or an optical disk drive, and the storage unit 50 is electrically coupled to the first circuit board 21.

The chassis 10 further includes a cover panel 14 sealed with the side panel 12 on another side of the chassis 10. If it is necessary to replace or remove a component from the interior of a general computer system, the cover panel 14 is detached from the chassis 10, and the flat cables and power cables are removed one by one before the required component is replaced.

In the present invention, the motherboard can be plugged or unplugged quickly by means of the first connector 20 and the second connector 33, and the mechanism of the retaining board 31 and the slide slot 121 can be slid and moved with respect to the retaining board 31, such that the retaining board 31 together with the motherboard 32 can be removed from the chassis 10 quickly for replacing components outside the chassis 10.

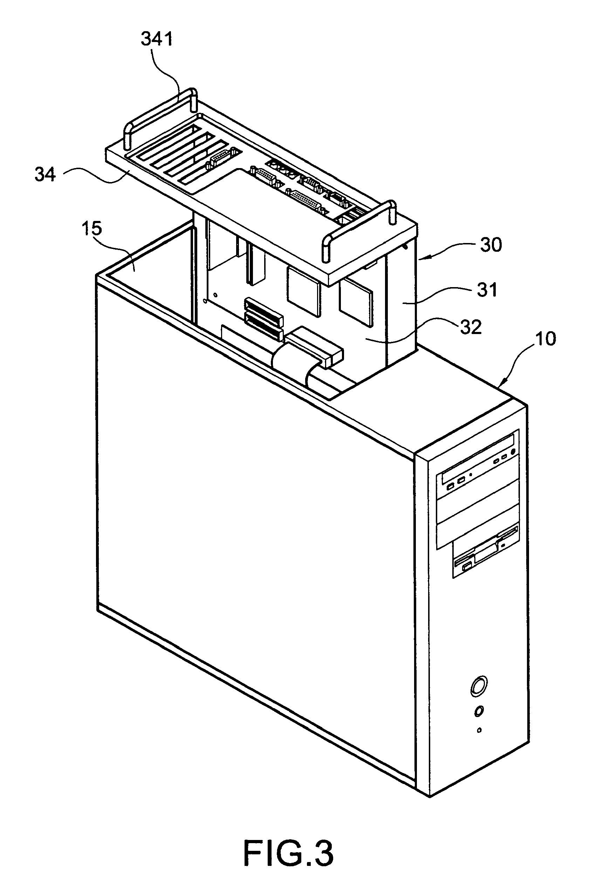

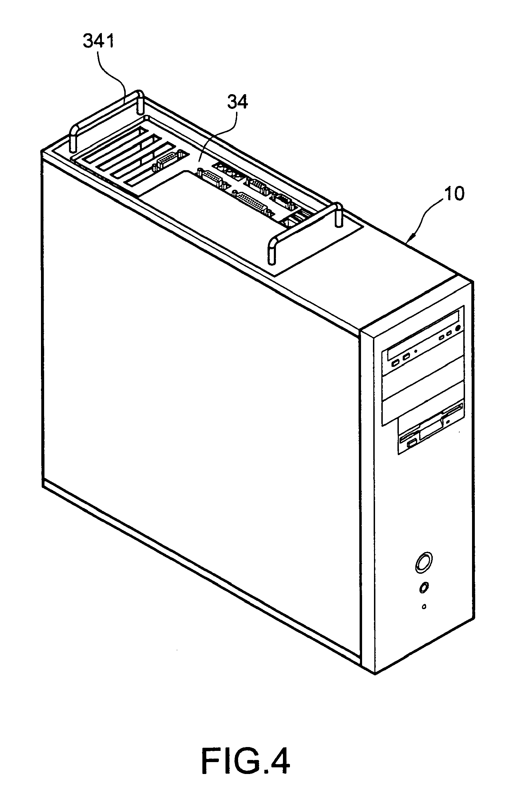

Referring to Figs. 3 and 4 for a schematic view and a perspective view of another preferred embodiment of the present invention respectively, the ports of a general computer system are disposed at a rear side of the computer system. In this embodiment, an open groove 15 is disposed at the top of the chassis 10 and provided for inserting the retaining board 31 downward from the top of the chassis 10, such that if a user wants to connect an external device to the computer system, the user needs not to move the whole set of computer system, but just connects each transmission line directly to the top of the chassis 10.

Therefore, the pluggable motherboard module and a computer system with the same have the following advantages:
1. With the mechanism of the retaining board 31 and the slide slot 121 as well as the quick plugging and unplugging of the first connector 20 and the second connector 33, the motherboard 32 mounted onto the retaining board 31 can be installed to or removed from the chassis 10 quickly.
2. With the design of the first connector 20, the flat cable and the power cable in the chassis 10 and the flat cable and the power cables in the second connector 33 can be integrated with motherboard 32 to provide a neat arrangement of cables inside the chassis 10.
3. With the design of mounting the motherboard 32 onto the retaining board 31, the present invention is applicable to a variety of motherboards 32 of different specifications by designing a plurality of fixing holes of different specifications on the retaining board 31. Such arrangement can improve the practicability of the invention greatly.

## Claims

1. A pluggable motherboard module, coupled to a first connector 20 in a computer chassis 10, and the motherboard module comprising:
a retaining board 31, slidably coupled to the computer chassis 10;
a motherboard 32, mounted onto the retaining board 31; and
a second connector 33, coupled to the retaining board 31, and electrically coupled with the motherboard 32, and provided for plugging the first connector 20.

2. The pluggable motherboard module of claim 1, wherein the second connector 33 is a circuit board connector 331, and a side of the circuit board connector 331 includes a plug end 3311, and the plug end 3311 includes a plurality of goldfingers 3312 provided for connecting the first connector 20.

3. The pluggable motherboard module of claim 2, wherein the circuit board connector 331 includes a plurality of ports 35 electrically coupled with the motherboard 32.

4. A computer system with a pluggable motherboard module, comprising:
a chassis 10; and
a first connector 20, coupled to the interior of the chassis 10; and
the pluggable motherboard module, comprising:
a retaining board 31, slidably coupled to the computer chassis 10;
a motherboard 32, mounted onto the retaining board 31; and
a second connector 33, coupled to the retaining board 31, and electrically coupled with the motherboard 32, and provided for plugging the first connector 20.

5. The computer system with a pluggable motherboard module of claim 4, wherein the chassis 10 includes a bottom panel 11 and a side panel 12 coupled perpendicular to the bottom panel 11, and the side panel 12 includes a pair of slide slots 121 provided for inserting the retaining board 31 and sliding with respect to the chassis 10.

6. The computer system with a pluggable motherboard module of claim 5, wherein the side panel 12 is coupled perpendicular to a partition13, and the partition13 is coupled to the first connector 20.

7. The computer system with a pluggable motherboard module of claim 4, wherein the second connector 33 is a circuit board connector 331, and a side of the circuit board connector 331 includes a plug end 3311, and the plug end includes a plurality of goldfingers 3312 provided for connecting the first connector 20.

8. The computer system with a pluggable motherboard module of claim 7, wherein the circuit board connector 331 includes a plurality of ports 35 electrically coupled to the motherboard 32.

9. The computer system with a pluggable motherboard module of claim 4, further comprising a first circuit board 21 coupled with the first connector 20.

10. The computer system with a pluggable motherboard module of claim 9, further comprising a port 35 and a plurality of storage units 50, and the port 35 and the storage units 50 are electrically coupled with the first circuit board 21.
